# EUROPÄISCHE PATENTSCHRIFT

(11) **EP 0 783 460 B1**
(45) Veröffentlichungstag und Bekanntmachung des Hinweises auf die Patenterteilung: **07.01.1998**
(21) Anmeldenummer: 96926965.3
(22) Anmeldetag: 16.08.1996
(51) Int. Cl.: C02F 1/32

(54) **VERFAHREN ZUR AUFARBEITUNG EINER WÄSSRIGEN PROZESSFLÜSSIGKEIT DES AMINOXIDVERFAHRENS**
METHOD OF PROCESSING AN AQUEOUS SOLUTION IN THE AMINE OXIDE PROCESS
PROCEDE DE TRAITEMENT D'UNE SOLUTION AQUEUSE PRODUITE PENDANT LE PROCEDE A L'OXYDE D'AMINE

(30) Priorität: 18.08.1995 AT 1401/95
(43) Veröffentlichungstag der Anmeldung: 16.07.1997
(73) Patentinhaber: LENZING AKTIENGESELLSCHAFT, 4860 Lenzing (AT)
(72) Erfinder: HARFMANN, Peter, A-4844 Regau (AT); ASTEGGER, Stephan, A-4850 Timelkam (AT)
(74) Vertreter: Schwarz, Albin, Dr. Kopecky & Schwarz Patentanwälte
(86) Internationale Anmeldenummer: AT9600151
(87) Internationale Veröffentlichungsnummer: WO9707059

(56) Entgegenhaltungen:
- WO-A-93/02965

## Beschreibung

Die vorliegende Erfindung betrifft ein Verfahren zur Aufarbeitung einer wäßrigen Prozeßflüssigkeit des Aminoxidverfahrens, bei welchem N-Nitrosomorpholin zerstört wird. Die vorliegende Erfindung betrifft insbesondere ein Verfahren zur Aufarbeitung einer wäßrigen Prozeßflüssigkeit des Aminoxidverfahrens, welche N-Nitrosomorpholin und ein peroxidisches Oxidationsmittel enthält.

Seit einigen Jahrzehnten wird nach Verfahren zur Herstellung cellulosischer Formkörper gesucht, welche das heute in großem Maßstab angewendete Viskoseverfahren ersetzen sollen. Als eine nicht zuletzt wegen einer besseren Umweltverträglichkeit interessante Alternative hat sich dabei herauskristallisiert, Cellulose ohne Derivatisierung in einem organischen Lösungsmittel aufzulösen und aus dieser Lösung Formkörper, z.B. Fasern, Folien und anderen Formkörpern, zu extrudieren. Solcherart extrudierte Fasern erhielten von der BISFA (The International Bureau for the Standardization of man made fibers) den Gattungsnamen Lyocell. Unter einem organischen Lösungsmittel wird von der BISFA ein Gemisch aus einer organischen Chemikalie und Wasser verstanden.

Es hat sich herausgestellt, daß sich als organisches Lösungsmittel insbesondere ein Gemisch aus einem tertiären Aminoxid und Wasser sehr gut zur Herstellung von cellulosischen Formkörpern eignet. Als Aminoxid wird dabei in erster Linie N-Methylmorpholin-N-oxid (NMMO) verwendet. Andere Aminoxide sind z.B. in der EP-A - 0 553 070 beschrieben. Ein Verfahren zur Herstellung formbarer Celluloselösungen ist z.B. aus der EP-A - 0 356 419 bekannt. Die Herstellung cellulosischer Formkörper unter Anwendung tertiärer Aminoxide wird für die Zwecke der vorliegenden Beschreibung und der vorliegenden Patentansprüche allgemein als Aminoxidverfahren bezeichnet.

In der EP-A - 0 356 419 ist ein Aminoxidverfahren zur Herstellung spinnbarer Celluloselösungen beschrieben, welches als Ausgangsmaterial u.a. eine Suspension von Cellulose in flüssigem, wäßrigem N-Methylmorpholin-N-oxid (NMMO) verwendet. Dieses Verfahren besteht darin, daß die Suspension in einem Dünnschichtbehandlungsapparat einstufig und kontinuierlich in eine formbare Lösung übergeführt wird. Die formbare Lösung wird schließlich in einem Formwerkzeug, z.B einer Spinndüse, zu Filamenten versponnen, die durch ein Fällbad geführt werden.

Im Fällbad wird die Cellulose ausgefällt. Das tertiäre Aminoxid reichert sich im Fällbad an. Der Gehalt an Aminoxid im Fällbad kann dabei bis zu 30 Gew.-% betragen. Für die Wirtschaftlichkeit des Aminoxidverfahrens ist es von entscheidender Bedeutung, das Aminoxid möglichst vollständig zurückzugewinnen und neuerlich zur Herstellung einer formbaren Celluloselösung zu verwenden. Es ist somit erforderlich, aus dem Fällbad NMMO rückzugewinnen.

Mit dem Aminoxid reichern sich im Fällbad jedoch auch Abbauprodukte des Aminoxidverfahrens an. Diese Abbauprodukte können stark gefärbt sein und damit die Qualität der hergestellten cellulosischen Formkörper beeinträchtigen. Andere Stoffe wiederum können zusätzlich ein Sicherheitsrisiko darstellen, da das Aminoxid unter gewissen Bedingungen zu stark exothermen Zersetzungsreaktionen neigt und diese Zersetzungsreaktionen von bestimmten Stoffen induziert oder beschleunigt werden können. Diese Stoffe müssen vor der Konzentrierung und Abtrennung von NMMO aus dem aufzuarbeitenden Fällbad entfernt werden.

Nach dem Entfernen dieser unerwünschten Stoffe wird aus dem gereinigten Fällbad, welches gegebenenfalls mit anderen Prozeßwässern des Aminoxidverfahrens, wie z.B. Brüdenkondensaten, die bei der Herstellung der Celluloselösung anfallen, vereinigt wird, Wasser abgezogen. Dies kann beispielsweise durch Eindampfen geschehen. Im Sumpf dieser Eindampfung fällt hochkonzentriertes, wäßriges Aminoxid an, welches wieder in das Aminoxidverfahren rezykliert wird. Die Brüden der Eindampfung bestehen hauptsächlich aus Wasser, in welchem aber auch erhebliche Mengen an N-Methylmorpholin, das hauptsächliche Abbauprodukt des NMMO, gelöst sind. Ferner sind in den Brüden auch NMMO und Morpholin zu finden. Die Brüden enthalten pro Liter typischerweise bis zu 100 mg NMMO, 240 mg N-Methylmorpholin und 30 mg Morpholin. Diese Brüden werden zweckmäßigerweise konzentriert, beispielsweise durch Umkehrosmose. Die erhaltene wäßrige Lösung enthält typischerweise bis zu 4 g NMMO, bis zu 10 g N-Methylmorpholin und bis zu etwa 1 g Morpholin.

Um die Verluste an NMMO möglichst gering zu halten, ist man bemüht, das N-Methylmorpholin wieder zu NMMO zu oxidieren. Dies gelingt beispielsweise mit einem peroxidischen Oxidationsmittel. Nachteilig ist dabei, daß im Prozeßwasser vorhandenes Morpholin, welches als Verunreinigung mit den tertiären Aminen eingeschleppt wird, teilweise zu toxischem N-Nitrosomorpholin umgesetzt wird, welches sich im NMMO-Kreislauf unerwünscht anreichert.

Ein Verfahren zur präparativen Herstellung von tertiären Aminoxiden durch Oxidation von tertiären Aminen ist beispielsweise aus der EP-A - 0 092 862 bekannt. Gemäß diesem Verfahren wird das Aminoxid in einem wäßrigen Lösungsmittel mit molekularem Sauerstoff unter Druck oxidiert, welches Lösungsmittel einen pH-Wert aufweist, der etwa gleich hoch oder höher als der pKa-Wert des tertiären Amins ist.

Die DD-A - 259 863 betrifft die Herstellung wäßriger NMMO-Lösungen durch Oxidation von N-Methylmorpholin mit H₂O₂ und Leiten der Reaktionslösung über eine oder mehrere Austauschersäulen, die mit sulfonatgruppenhaltigem Styrol/Divinylbenzol-Copolymerisat gefüllt sind, sowie durch Einstellen eines pH-Wertes der Lösung auf Werte zwischen 8 und 5 durch Zusatz von Phosphorsäure.

Die Oxidation von N-Methylmorpholin mit H₂O₂ zu NMMO ist z.B. aus der EP-A - 0 254 803 bekannt. Aus der DE-A - 0 414 0259 ist die Herstellung von NMMO bekannt, bei welchem Verfahren die Bildung von Nitrosaminen hintangehalten wird, indem primäre und sekundäre Amine z.B. mit Säurehalogeniden abgefangen werden. Die EP-A - 0 320 690 beschreibt die Herstellung von im wesentlichen nitrosaminfreien Aminoxiden durch Oxidation mittels Peroxiden in Gegenwart einer Kombination von CO₂/Ascorbinsäure, welche als Nitrosamininhibitor wirkt. Aus der EP-A - 0 401 503 ist die Oxidation mit H₂O₂ in Wasser und einem Cosolvens, vorzugsweise ein Carbonsäureester, bekannt. Gemäß der FR-A - 8 808 039 wird die Oxidation unter Zusatz von CO₂ durchgeführt, und gemäß der US-A - 5,216,154 wird die Oxidation zu NMMO in reiner CO₂-Atmosphäre durchgeführt.

Die Hintanhaltung der Bildung von Nitrosaminen wird im Stand der Technik entweder nicht erreicht, oder sie wird durch Verbrauch der Ausgangsprodukte des N-Nitrosomorpholins oder durch Zusätze zur Verlangsamung der N-Nitrosomorpholin-Bildungsrate erzielt. Insbesondere in einem Aminoxidverfahren welches einen geschlossenen Kreislauf darstellt, bedingt die Zugabe von diversen Chemikalien, wie z.B. Säurehalogenide oder Ascorbinsäure bzw. auch CO₂, zum Prozeß Probleme bei der Reinigung der Prozeßwässer, da die aus den zugesetzten Chemikalien stammenden Abbauprodukte aus dem Verfahren entfernt werden müssen. Bei vielen Chemikalien sind auch Sicherheitsaspekte in Bezug auf die Gefahr von Exothermien zu berücksichtigen. Daher sind alle diese Varianten für die Aufarbeitung von Prozeßwässern des Aminoxidverfahrens ungeeignet.

Die vorliegende Erfindung setzt sich daher zum Ziel, ein Verfahren zur Zerstörung von Nitrosomorpholin in einer wäßrigen Lösung, welche N-Nitrosomorpholin und ein peroxidisches Oxidationsmittel enthält, zur Verfügung zu stellen, welches ohne chemische Zusätze N-Nitrosomorpholin wirksam zerstört und seine Anreicherung verhindert. Ein weiteres Ziel der vorliegende Erfindung besteht darin, ein Verfahren zur Aufarbeitung von Prozeßwässern bereitzustellen, mit welchem auf einfache Weise das toxische N-Nitrosomorpholin weitgehend entfernt und N-Methylmorpholin weitgehend zu NMMO oxidiert wird.

Dieses Ziel wird bei einem Verfahren zur Zerstörung von Nitrosomorpholin in einer wäßrigen Lösung, welche N-Nitrosomorpholin und ein peroxidisches Oxidationsmittel enthält, erfindungsgemäß dadurch erreicht, daß die wäßrige Lösung mit ultraviolettem Licht bestrahlt wird, welches im wesentlichen eine Wellenlänge von 254 nm aufweist. Die Bestrahlungsleistung kann z.B. 200 bis 500 mJ/cm² betragen und ist von der Konstruktion der Lampe und von den Prozeßbedingungen, insbesondere der Temperatur, abhängig. Das erfindungsgemäße Verfahren kommt ganz ohne zusätzliche Chemikalien aus.

Es hat sich gezeigt, daß die erfindungsgemäße Bestrahlung eine äußerst wirksame Zerstörung des N-Nitrosomorpholins gestattet, und daß die Gegenwart des peroxidischen Oxidationsmittels nicht stört.

Es sind Arbeitsvorschriften zur quantitativen Analyse von Nitrosaminen bekannt, welche eine UV-Bestrahlung und eine anschließende Bestimmung der entstandenen Nitrite anwenden (D.E.G. Shuker, S.R. Tannenbaum, Anal. Chem., 1983, 55, 2152-2155; M. Rhighezza, M.H. Murello, A.M. Siouffi, J. Chromat., 1987, 410, 145-155; J.J. Conboy, J.H. Hotchkiss, Analyst, 1989, 114, 155-159; B. Büchele, L. Hoffmann, J. Lang, Fresen.J.Anal.Chem., 1990, 336, 328-333). Diese analytischen Arbeitsvorschriften behandeln jedoch nicht die Zerstörung von N-Nitrosomorpholin.

Das ultraviolette Licht, mit welchem die wäßrige Lösung bestrahlt wird, stammt am besten von einer Quecksilber-Niederdrucklampe. Diese Niederdrucklampen besitzen ein Intensitätsmaximum bei 254 nm.

Zur erfindungsgemäßen Bestrahlung mit einer Niederdrucklampe kann die Lampe entweder in den Behälter, welcher das zu behandelnde Prozeßwasser enthält, eingehängt werden. Die Lampe kann aber auch auf eine andere Weise angeordnet werden. Ferner kann die Bestrahlung beispielweise auch während eines kontinuierlichen Umpumpens der zu bestrahlenden Lösung in einem Dünnfilm-UV-Reaktor vorgenommen werden.

Die Erfindung betrifft ferner ein Verfahren zur Herstellung einer wäßrigen Lösung von N-Methylmorpholin-N-oxid, das gekennzeichnet ist durch die folgenden Maßnahmen, daß
(a) eine wäßrige Lösung vorgesehen wird, welche N-Methylmorpholin und Morpholin enthält;
(b) diese wäßrige Lösung mit einem peroxidischen Oxidationsmittel behandelt wird, um N-Methylmorpholin zu N-Methylmorpholin-N-oxid zu oxidieren, und
(c) die wäßrige Lösung mit ultraviolettem Licht bestrahlt wird, das von einer Quecksilber-Niederdrucklampe stammt.

Die Bestrahlung wird vorzugsweise entweder während der Behandlung mit dem peroxidischen Oxidationsmittel oder danach vorgenommen.

Als peroxidisches Oxidationsmittel wird im erfindungsgemäßen Verfahren bevorzugt H₂O₂ eingesetzt. Das H₂O₂ wird vorzugsweise in Form einer wäßrigen Lösung mit 30-50 Gew.-% H₂O₂ eingesetzt. Das H₂O₂ wird am besten in einer Menge von 0,8 bis 2 Mol pro Mol N-Methylmorpholin eingesetzt.

Eine besonders bevorzugte Ausführungsform des erfindungsgemäßen Verfahrens besteht darin, daß der pH-Wert der wäßrigen Lösung, die mit dem peroxidischen Oxidationsmittel behandelt wird, im Bereich von 6,0 bis 9,0 liegt. Es hat sich gezeigt, daß in diesem Bereich die Oxidation von N-Methylmorpholin zu N-Methylmorpholin-N-oxid ein Maximum und die unerwünschte Bildung des N-Nitrosomorpholins ein Minimum aufweist. Auf diese Weise kann in Kombination mit einer Bestrahlungbehandlung der Gehalt an N-Nitrosomorpholin im rezyklierten, wäßrigen NMMO besonders niedrig gehalten werden. Die Einstellung des pH-Wertes kann beispielsweise durch Zugeben einer Base vorgenommen werden.

Die Erfindung betrifft ferner ein Verfahren zur Rückgewinnung von N-Methylmorpholin-N-oxid aus einem gebrauchten Fällbad, welches im Aminoxidverfahren anfällt, das gekennzeichnet ist durch die folgenden Schritte, daß
(1) das gebrauchte Fällbad gereinigt wird;
(2) aus dem gereinigten Fällbad Wasser abgedampft wird, wobei ein konzentriertes, wäßriges N-Methylmorpholin-N-oxid und Brüden gebildet werden, welche Brüden kondensiert werden und NMMO, N-Methylmorpholin und Morpholin enthalten;
(3) aus den kondensierten Brüden Wasser entfernt wird, um die kondensierten Brüden zu konzentrieren, mit der Maßgabe, daß die Wasserentfernung nicht durch Verdampfung vorgenommen wird;
(4) die kondensierten, konzentrierten Brüden mit einem peroxidischen Oxidationsmittel behandelt werden, um N-Methylmorpholin zu N-Methylmorpholin-N-oxid zu oxidieren, mit ultraviolettem Licht bestrahlt werden, das von einer Quecksilber-Niederdrucklampe stammt, und zur Rückgewinnung von N-Methylmorpholin-N-oxid aufgearbeitet werden.

Die Aufarbeitung und Rückgewinnung des NMMO kann durch Eindampfen der im Schritt (4) erhaltenen bestrahlten wäßrigen Lösung vorgenommen werden. Zweckmäßigerweise wird dazu vorher die bestrahlte Lösung mit weiterem gereinigten Fällbad vereinigt. Auf diese Weise wird ein geschlossener Prozeß verwirklicht.

Es ist ferner möglich, die Oxidation, die Bestrahlung mit ultraviolettem Licht und die Eindampfung in einem einzigen Reaktionsgefäß vorzunehmen, wobei sämtliche Arbeitsgänge mehr oder weniger gleichzeitig durchgeführt werden.

Eine weitere Möglichkeit besteht darin, während der Reaktion kontinuierlich aus dem Reaktionsgemisch einen Teil der Reaktionslösung zu entnehmen, diese über einen UV-Reaktor zu leiten und wieder dem Reaktionsgefäß zuzuführen.

Mit den nachfolgenden Beispielen wird die Erfindung näher erläutert. Die im Folgenden verwendeten Abkürzungen NMOR, NMMO, NMM und M stehen für N-Nitrosomorpholin, N-Methylmorpholin-N-oxid, N-Methylmorpholin bzw. Morpholin.

### Beispiel 1

Eine wäßrige Lösung, welche pro Liter 42 µg NMOR, 459 mg NMMO, 4300 mg NMM und 200 mg M enthielt, wurde in einem UV-Reaktor mit einer Quecksilber-Niederdrucklampe (Type Katadyn UV-Strahler EK-36, Nr. 79000; Hersteller: Katadyn) bestrahlt (Wellenlänge: 254 nm). Die Temperatur der wäßrigen Lösung war 60°C.

Die Konzentration an NMOR wurde mittels HPLC bestimmt (Säule: Hypersil ODS 250 x 4 mm; 50°C; Laufmittel: A = 0,6% Acetonitril; B = 49,7% H₂O; Gradient 1 ml/min; 10 min. - 100% A; 7 min - 100% B; Detektor: UV 238 nm).

Nach einer Bestrahlungszeit von 150 Minuten nahm der Gehalt an NMOR im Prozeßwasser auf 40 µg/l ab. Nach weiteren 150 Minuten war kein NMOR mehr nachweisbar.

Nachdem kein NMOR mehr nachgewiesen werden konnte, wurde die Bestrahlung beendet und in Abständen von mehreren Stunden neuerlich auf NMOR geprüft. Es konnte kein NMOR nachgewiesen werden, womit bewiesen war, daß sich kein NMOR rückbilden kann.

### Beispiel 2

Eine wäßrige Lösung, welche pro Liter 25 µg NMOR, 2530 mg NMMO, 3923 mg NMM und 30 mg M enthielt, wurde zur Oxidation von NMM zu NMMO mit 30%-igem H₂O₂ versetzt (Mol NMM/Mol H₂O₂ = 1/1,2) und wie in Beispiel 1 beschrieben mit UV-Licht bestrahlt. Innerhalb der ersten 90 Minuten stieg die NMOR-Konzentration auf 45 µg/l an, was auf eine schnelle Reaktion des in der Lösung befindlichen M zurückzuführen ist. Anschließend nahm die Konzentration an NMOR wieder stark ab. Nach 6 Stunden war kein NMOR mehr nachweisbar.

Nach einer Gesamtoxidationszeit von 20 Stunden enthielt die Lösung 5386 mg NMMO/Liter. Dies entspeicht einer Ausbeute von 62% der Theorie.

### Beispiel 3

Eine wäßrige Lösung, welche pro Liter 1484 mg NMMO, 3332 mg NMM und 48 mg M (NMOR war unter der Nachweisgrenze) enthielt, wurde, wie in Beispiel 2 beschrieben, mit H₂O₂ behandelt, allerdings zunächst nicht mit ultraviolettem Licht bestrahlt. Dadurch stieg der Gehalt an NMOR innerhalb der ersten Stunde auf 44 µg/l und im Verlauf von insgesamt 21 Stunden auf 205 µg/l an. Nach etwa 21 Stunden wurde die Lösung gemäß den obigen Beispielen mit ultraviolettem Licht bestrahlt. Durch die erfindungsgemäße Bestrahlung mit dem ultraviolettem Licht fiel die Konzentration an NMOR innerhalb von 3 Stunden auf 12 µg/l ab.

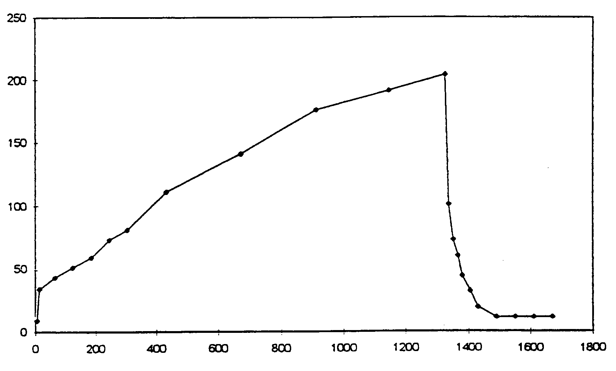

Die Ergebnisse sind in der Abbildung grafisch dargestellt, welche ein Diagramm zeigt, das als X-Achse die Zeit in Minuten und als Y-Achse den Gehalt an NMOR in µg/l aufweist.

## Patentansprüche

1. Verfahren zur Zerstörung von N-Nitrosomorpholin in einer wäßrigen Lösung, welche N-Nitrosomorpholin und ein peroxidisches Oxidationsmittel enthält, dadurch gekennzeichnet, daß die wäßrige Lösung mit ultraviolettem Licht bestrahlt wird, welches im wesentlichen eine Wellenlänge von 254 nm aufweist.

2. Verfahren nach Anspruch 1, dadurch gekennzeichnet, daß das ultraviolette Licht, mit welchem die wäßrige Lösung bestrahlt wird, von einer Quecksilber-Niederdrucklampe stammt.

3. Verfahren nach Anspruch 1 oder 2, dadurch gekennzeichnet, daß als peroxidisches Oxidationsmittel H₂O₂ eingesetzt wird.

4. Verfahren zur Herstellung einer wäßrigen Lösung von N-Methylmorpholin-N-oxid, gekennzeichnet durch die folgenden Maßnahmen, daß
(a) eine wäßrige Lösung vorgesehen wird, welche N-Methylmorpholin und Morpholin enthält;
(b) diese wäßrige Lösung mit einem peroxidischen Oxidationsmittel behandelt wird, um N-Methylmorpholin zu N-Methylmorpholin-N-oxid zu oxidieren, und
(c) die wäßrige Lösung mit ultraviolettem Licht bestrahlt wird, das von einer Quecksilber-Niederdrucklampe stammt.

5. Verfahren nach Anspruch 4, dadurch gekennzeichnet, daß die Maßnahme (c) nach der Maßnahme (b) vorgenommen wird.

6. Verfahren nach einem der Ansprüche 4 oder 5, dadurch gekennzeichnet, daß der pH-Wert der wäßrigen Lösung, die mit dem peroxidischen Oxidationsmittel behandelt wird, im Bereich von 6,0 bis 9,0 liegt.

7. Verfahren zur Rückgewinnung von N-Methylmorpholin-N-oxid aus einem gebrauchten Fällbad, welches im Aminoxidverfahren anfällt, gekennzeichnet durch die folgenden Schritte, daß
(1) das gebrauchte Fällbad gereinigt wird;
(2) aus dem gereinigten Fällbad Wasser abgedampft wird, wobei ein konzentriertes, wäßriges N-Methylmorpholin-N-oxid und Brüden gebildet werden, welche Brüden kondensiert werden und NMMO N-Methylmorpholin und Morpholin enthalten;
(3) aus den kondensierten Brüden Wasser entfernt wird, um die kondensierten Brüden zu konzentrieren, mit der Maßgabe, daß die Wasserentfernung nicht durch Verdampfung vorgenommen wird;
(4) die kondensierten, konzentrierten Brüden mit einem peroxidischen Oxidationsmittel behandelt werden, um N-Methylmorpholin zu N-Methylmorpholin-N-oxid zu oxidieren, mit ultraviolettem Licht bestrahlt werden, das von einer Quecksilber-Niederdrucklampe stammt, und zur Rückgewinnung von N-Methylmorpholin-N-oxid aufgearbeitet werden.

## Claims

1. Process for destroying N-nitrosomorpholine in an aqueous solution containing N-nitrosomorpholine and a peroxidic oxidizing agent, characterized in that the aqueous solution is irradiated with ultraviolet light which essentially has a wavelength of 254 nm.

2. Process according to Claim 1, characterized in that the ultraviolet light with which the aqueous solution is irradiated originates from a mercury low-pressure lamp.

3. Process according to Claim 1 or 2, characterized in that H₂O₂ is used as peroxidic oxidizing agent.

4. Process for preparing an aqueous solution of N-methylmorpholine N-oxide, characterized by the following measures, in that
(a) an aqueous solution is provided which contains N-methylmorpholine and morpholine;
(b) said aqueous solution is treated with a peroxidic oxidizing agent in order to oxidize N-methylmorpholine to N-methylmorpholine N-oxide, and
(c) the aqueous solution is irradiated with ultraviolet light which originates from a mercury low-pressure lamp.

5. Process according to Claim 4, characterized in that the measure (c) is performed after the measure (b).

6. Process according to one of Claims 4 or 5, characterized in that the pH of the aqueous solution which is treated with the peroxidic oxidizing agent is in the range from 6.0 to 9.0.

7. Process for recovering N-methylmorpholine N-oxide from a spent precipitation bath which is produced in the amine oxide process, characterized by the following steps, in that
(1) the spent precipitation bath is purified;
(2) water is evaporated from the purified precipitation bath, in which process a concentrated, aqueous N-methylmorpholine N-oxide and vapours are formed, which vapours are condensed and contain NMMO, N-methylmorpholine and morpholine;
(3) water is removed from the condensed vapours in order to concentrate the condensed vapours, with the proviso that the water removal is not performed by evaporation;
(4) the condensed, concentrated vapours are treated with a peroxidic oxidizing agent in order to oxidize N-methylmorpholine to N-methylmorpholine N-oxide, irradiated with ultraviolet light originating from a mercury low-pressure lamp and worked up to recover N-methylmorpholine N-oxide.

## Revendications

1. Procédé pour la décomposition de N-nitrosomorpholine dans une solution aqueuse, laquelle contient de la N-nitrosomorpholine et un agent d'oxydation peroxydique, caractérisé en ce que la solution aqueuse est irradiée avec de la lumière ultraviolette, laquelle présente en substance une longueur d'ondes de 254 nm.

2. Procédé selon la revendication 1, caractérisé en ce que la lumière ultraviolette avec laquelle la solution aqueuse est irradiée provient d'une lampe à mercure à basse pression.

3. Procédé selon la revendication 1 ou 2, caractérisé en ce que l'on utilise comme agent d'oxydation peroxydique H₂O₂.

4. Procédé pour la préparation d'une solution aqueuse de N-méthylmorpholine-N-oxyde, caractérisé par les mesures suivantes consistant en ce que :
(a) on prévoit une solution aqueuse, laquelle contient de la N-méthylmorpholine et de la morpholine;
(b) on traite cette solution aqueuse avec un agent d'oxydation peroxydique pour oxyder la N-méthylmorpholine en N-méthylmorpholine-N-oxyde, et
(c) on irradie la solution aqueuse avec de la lumière ultraviolette qui provient d'une lampe à mercure à basse pression.

5. Procédé selon la revendication 4, caractérisé en ce que l'on procède à la mesure (c) après la mesure (b).

6. Procédé selon l'une quelconque des revendications 4 ou 5, caractérisé en ce que la valeur du pH de la solution aqueuse qui est traitée avec l'agent d'oxydation peroxydique se trouve dans le domaine de 6,0 à 9,0.

7. Procédé pour la récupération de N-méthylmorpholine-N-oxyde à partir d'un bain de précipitation usé, lequel est produit dans un procédé amino-oxyde, caractérisé par les étapes suivantes consistant en ce que :
(1) on purifie le bain de précipitations usé;
(2) on évapore l'eau du bain de précipitation purifié, un N-méthylmorpholine-N-oxyde concentré aqueux et des fumées étant formés, lesquelles fumées sont condensées et contiennent NMMO, de la N-méthylmorpholine et de la morpholine;
(3) on élimine l'eau des fumées condensées afin de concentrer les fumées condensées à la condition que l'on ne procède pas à l'élimination d'eau par évaporation;
(4) on traite les fumées condensées, concentrées avec un agent d'oxydation peroxydique pour oxyder la N-méthylmorpholine en N-méthylmorpholine-N-oxyde, on les irradie avec de la lumière ultraviolette qui provient d'une lampe à mercure à basse pression et on les traite pour la récupération de N-méthylmorpholine-N-oxyde.
